(19) Europäisches Patentamt
European Patent Office
Office européen des brevets

(11) EP 3 766 696 B1

(12) EUROPEAN PATENT SPECIFICATION

(45) Date of publication and mention
of the grant of the patent:
13.08.2025 Bulletin 2025/33

(51) International Patent Classification (IPC):
B32B 25/04 (2006.01)     B32B 1/08 (2006.01)
B32B 27/28 (2006.01)     B32B 27/32 (2006.01)
F16L 11/06 (2006.01)     C08K 3/22 (2006.01)
C08L 23/08 (2025.01)

(21) Application number: 19768308.9

(22) Date of filing: 08.03.2019

(52) Cooperative Patent Classification (CPC):
F16L 11/04; B32B 7/12; B32B 25/042; B32B 25/08;
B32B 25/14; B32B 27/08; B32B 27/32;
B32B 2250/02; B32B 2250/04; B32B 2250/24;
B32B 2270/00; B32B 2597/00; B32B 2605/08;
C08K 3/22; C08L 23/08

(86) International application number:
PCT/JP2019/009326

(87) International publication number:
WO 2019/176767 (19.09.2019 Gazette 2019/38)

(54) **LAMINATE AND USE THEREOF**

LAMINAT UND VERWENDUNG DAVON

STRATIFIÉ, ET APPLICATION DE CELUI-CI

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 14.03.2018  JP 2018046851
14.03.2018  JP 2018046852
14.03.2018  JP 2018046853

(43) Date of publication of application:
20.01.2021 Bulletin 2021/03

(73) Proprietor: Mitsui Chemicals, Inc.
Tokyo 104-0028 (JP)

(72) Inventors:
• KIKUCHI, Yoshiharu
Ichihara-shi, Chiba 299-0108 (JP)
• ICHINO, Kotaro
Ichihara-shi, Chiba 299-0108 (JP)

(74) Representative: J A Kemp LLP
80 Turnmill Street
London EC1M 5QU (GB)

(56) References cited:
EP-A1- 3 603 957        WO-A1-2017/150612
WO-A1-2017/150612      WO-A1-2018/180140
WO-A1-2018/180140      WO-A1-2018/181493
WO-A1-2019/069766      JP-A- 2001 280 553
JP-A- 2001 280 553      JP-A- 2012 187 852
JP-A- 2016 163 953      JP-A- 2016 163 953
JP-A- H08 169 085       US-A- 5 588 469
US-A1- 2013 068 336

**Description**

TECHNICAL FIELD

The present invention relates to a laminate which has a layer including different kinds of polymers and which is excellent in adhesive strength and to an application of the laminate.

BACKGROUND ART

Industrial hoses formed from polymers such as synthetic rubbers are required to have various physical properties such as strength, flexibility, thermal resistance, bending resistance, and solvent resistance. However, it is difficult to satisfy all required characteristics by one kind of rubber. Therefore, polymers (synthetic rubbers) having different properties are laminated and used in general.

Fluorine-based polymers are excellent in thermal resistance, oil resistance, chemical resistance, weather resistance, and the like and are useful for industrial materials and in other fields. However, fluorine-based polymers are expensive, and economic efficiency is not negligible in generally using them in these fields. Therefore, despite having outstanding performance, amounts of fluorine-based polymers to be used cannot be expected to massively increase so far.

On the other hand, since halogen-containing rubbers such as an acrylic rubber (ACM), which is a copolymer of an acrylic acid ester and 2-chloroethyl vinyl ether, and an epichlorohydrin rubber (ECO) are excellent in oil resistance, thermal resistance, weather resistance, and the like, they are widely used in functional parts such as various sealing materials, gaskets, packings, and thermal resistant and oil resistant hoses such as oil hoses and air hoses, with a central focus on automotive application.

In laminating different kinds of synthetic rubbers, while a synthetic rubber may directly adhere to another synthetic rubber in a case of polar synthetic rubbers, in a case of nonpolar rubbers, a method is commonly used in which rubbers are allowed to adhere to each other with an adhesive layer interposed therebetween.

Rubber hoses around automobile engines are required to have heat aging resistance, fatigue resistance, oil resistance, and the like at high levels. Therefore, a hose in which an expensive fluorine-based rubber and an acrylic rubber are laminated has been used. A fluorine-based rubber and a nonpolar rubber have been generally allowed to adhere to each other with an adhesive layer interposed therebetween (for example, see Patent Document 1). A method in which a layer including a fluorine rubber and a vulcanizing agent and a layer including a non-fluorine-based rubber and a vulcanizing agent are allowed to adhere through vulcanization adhesion has been proposed as an adhesion method without using an interposed adhesive layer (for example, see Patent Document 2).

Downsizing and turbocharging of engines have progressed recently for serving fuel consumption of automobiles. A turbocharged engine has a structure with which air compressed by a compressor wheel is cooled by a charge air cooler and sent to the engine, and the compressor wheel and the charge air cooler are connected by a rubber hose. Since highpressure and high-temperature (about 180°C) air passes through this turbocharger hose, this turbocharger hose is required to have high heat aging resistance. In addition, fatigue resistance is also required in order to withstand constant pressure vibration generated as air passes. Acrylic rubbers, silicone elastomers, and the like, which have high heat aging resistance, are currently employed for such applications.

Since industrial hoses including the above thermal resistant and oil resistant hoses are required to have various physical properties such as strength, flexibility, thermal resistance, bending resistance, and solvent resistance, it is difficult to satisfy all required characteristics by one kind of rubber. Therefore, attempts have been made to use rubbers having different properties (for example, the fluorine-based polymer and the halogen-containing rubber described above) in a laminate.

However, since adhesiveness between the fluorine-based copolymer and the halogen-containing rubber is poor, various methods have been proposed, examples of which include a method in which a peroxide, quaternary ammonium bromide, an epoxidized fatty acid ester, and the like are compounded in an acrylic elastomer (Patent Document 2); a method in which a silica-based filler and an organic peroxide are compounded in a fluorine-based polymer, and a silica-based filler, an organic peroxide, and a silane coupling agent are compounded in an acrylic rubber (Patent Document 3); and a method in which a metal oxide is compounded in any of a fluorine-based polymer and a halogen-containing rubber (Patent Document 4).

Patent Document 4 discloses a composition including an ethylene/alkyl acrylate copolymer and a cured product thereof and discloses that the cured product, which is a vulcanized product, exhibits improved impact fatigue resistance and thermal resistance compared to conventional vulcanized products.

Patent Document 5 proposes a fastening structure of piping having excellent thermal resistance and fatigue resistance for preventing occurrence of cleavage in an inner layer, and having an innermost rubber layer including a fluorine-based rubber and a coat layer of a silicone rubber, an acrylic rubber, an ethylene/acrylic rubber, or the like.

In addition, nonpolar rubbers such as an ethylene propylene diene rubber (EPDM) have been difficult to adhere to another material in general. As the EPDM is a nonpolar rubber, a method in which an adhesive layer is interposed in laminating the EPDM has been commonly used (for example, see Patent Document 6).

In addition, Patent Document 7 proposes compounding a metal oxide such as magnesium oxide in EPDM to improve adhesiveness against fluorine-based rubbers.

CITATION LIST

PATENT DOCUMENTS

Patent Document 1: JP 2005-523181 A
Patent Document 1: JP S61-189934 A
Patent Document 2: JP H01-152060 A
Patent Document 3: WO 2003/039858 A
Patent Document 4: JP 2009-500473 A
Patent Document 5: JP 2013-221580 A
Patent Document 6: JP 2014-162823 A
Patent Document 7: WO 2017/150612

SUMMARY OF INVENTION

TECHNICAL PROBLEM

An object of the present invention is to obtain a laminate with good adhesive strength between an ethylene/$\alpha$-olefin/non-conjugated polyene copolymer and a fluorine-based polymer having excellent oil resistance such as a fluorine-based rubber.

SOLUTION TO PROBLEM

The present invention relates to a laminate and a hose as defined in the appended claims.

ADVANTAGEOUS EFFECT OF INVENTION

Since the laminate of the present invention has good interlayer adhesive strength, the laminate of the present invention may be used for various applications.

DESCRIPTION OF EMBODIMENTS

<<Ethylene/$\alpha$-olefin/non-conjugated polyene copolymer>>

A polymer forming a layer (A) and a layer (1) of a laminate of the present invention is an ethylene/$\alpha$-olefin/non-conjugated polyene copolymer having the following characteristics.

An $\alpha$-olefin constituting the ethylene/$\alpha$-olefin/non-conjugated polyene copolymer according to the present invention is preferably an $\alpha$-olefin having 3 to 20 carbon atoms. Examples of the $\alpha$-olefin include propylene, 1-butene, 1-pentene, 1-hexene, 4-methyl-1-pentene, 1-heptene, 1-octene, 1-decene, 1-dodecene, 1-tetradecene, 1-hexadecene, and 1-eicosene. Among them, $\alpha$-olefins having 3 to 8 carbon atoms such as propylene, 1-butene, 1-hexene, and 1-octene are preferable, and propylene is especially preferable. Such $\alpha$-olefins are preferable because such $\alpha$-olefins are relatively inexpensive in terms of raw material costs, ethylene/$\alpha$-olefin/non-conjugated polyene copolymers obtained therefrom exhibit excellent mechanical properties, and a laminate further having rubber elasticity can be obtained. These $\alpha$-olefins may be used singly or in combinations of two or more.

The ethylene/$\alpha$-olefin/non-conjugated polyene copolymer according to the present invention includes at least one structural unit derived from the $\alpha$-olefin and may include two or more structural units derived from the $\alpha$-olefin.

Examples of a non-conjugated polyene constituting the ethylene/$\alpha$-olefin/non-conjugated polyene copolymer according to the present invention include 5-vinyl-2-norbornene (VNB), norbornadiene, 1,4-hexadiene, dicyclopentadiene, 5-ethylidene-2-norbornene (ENB), 5-methylene-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene, and 5-(1,2,3-trimethyl-4-pentenyl)-2-norbornene. These non-conjugated polyenes may be used singly in combinations of or two or more.

The ethylene/$\alpha$-olefin/non-conjugated polyene copolymer according to the present invention includes at least one structural unit derived from the non-conjugated polyene and may include two or more structural units derived from the non-conjugated polyene.

VNB is preferable among these non-conjugated polyenes from viewpoints that VNB is easily available, has good reactivity with an organic peroxide during crosslinking reaction after polymerization and that thermal resistance and fatigue resistance of a resultant laminate are excellent. That is, the ethylene/$\alpha$-olefin/non-conjugated polyene copolymer preferably has a structural unit derived from VNB. The structural unit derived from VNB in the ethylene/$\alpha$-olefin/non-conjugated polyene copolymer is preferably 0.07 to 10% by mass, more preferably 0.1 to 8.0% by mass, and most preferably 0.5 to 5.0% by mass in 100% by mass of the ethylene/$\alpha$-olefin/non-conjugated polyene copolymer.

In addition, ENB is preferable as the non-conjugated polyene from viewpoints that ENB is easily available, has good reactivity with sulfur and a vulcanizing enhancer during crosslinking reaction after polymerization, that crosslinking speed is easily controlled, and that good mechanical properties are easily obtained. That is, the ethylene/$\alpha$-olefin/non-conjugated polyene copolymer preferably has a structural unit derived from ENB.

The ethylene/$\alpha$-olefin/non-conjugated polyene copolymer according to the present invention preferably satisfies at least one requirement of the following requirements (I) to (III), more preferably satisfies at least two requirements of the following requirements (I) to (III), and especially preferably satisfies the following requirements (I) to (III).

Requirement (I): having a mole ratio (ethylene/$\alpha$-olefin) between a structural unit derived from ethylene and the structural unit derived from the $\alpha$-olefin of 40/60 to 99.9/0.1.

Requirement (II): having the structural unit derived from the non-conjugated polyene in an amount of 0.07 to 10% by mass in 100% by mass of the ethylene/$\alpha$-olefin/non-conjugated polyene copolymer.

Requirement (III): having an intrinsic viscosity [η] measured in decalin at 135°C of 1.0 to 4.0 dl/g.

[Requirement (I)]

Requirement (I) specifies that the ethylene/$\alpha$-olefin/non-conjugated polyene copolymer has a mole ratio (ethylene/$\alpha$-olefin) between the structural unit derived from ethylene and the structural unit derived from the $\alpha$-olefin of 40/60 to 99.9/0.1.

The mole ratio (ethylene/$\alpha$-olefin) between the structural unit derived from ethylene and the structural unit derived from the $\alpha$-olefin is more preferably 55/45 to 85/15 and especially preferably 55/45 to 78/22.

The ethylene/$\alpha$-olefin falling within the above range is preferable because a layer which includes a crosslinked body and which is obtained by crosslinking the ethylene/$\alpha$-olefin/non-conjugated polyene copolymer exhibits excellent rubber elasticity and has excellent mechanical strength and flexibility. In addition, the above range is preferable because the ethylene/$\alpha$-olefin/non-conjugated polyene copolymer exhibits excellent rubber elasticity and has excellent mechanical strength and flexibility.

The mole ratio between the structural unit derived from ethylene and the structural unit derived from the $\alpha$-olefin in the ethylene/$\alpha$-olefin/non-conjugated polyene copolymer can be obtained by $^{13}$C-NMR.

[Requirement (II)]

Requirement (II) specifies that the ethylene/$\alpha$-olefin/non-conjugated polyene copolymer has a structural unit derived from the non-conjugated polyene in an amount of 0.07 to 10% by mass in 100% by mass of the ethylene/$\alpha$-olefin/non-conjugated polyene copolymer.

The amount of the structural unit derived from the non-conjugated polyene is more preferably 0.1 to 8.0% by mass and especially preferably 0.5 to 5.0% by mass. The ethylene/$\alpha$-olefin/non-conjugated polyene copolymer having the structural unit derived from the non-conjugated polyene within the above range is preferable because of having sufficient hardness and therefore having excellent mechanical characteristics and because a crosslinked body having a high crosslinking density can be obtained and hardness of a layer of the crosslinked body can be enhanced thereby.

The amount of the structural unit derived from the non-conjugated polyene can be obtained by $^{13}$C-NMR.

[Requirement (III)]

Requirement (III) specifies that an intrinsic viscosity [η] of the ethylene/$\alpha$-olefin/non-conjugated polyene copolymer measured in decalin at 135°C is 1.0 to 4.0 dl/g.

The intrinsic viscosity [η] is more preferably 1.5 to 4.0 dl/g. The intrinsic viscosity [η] falling within the above range is preferable because balance between physical properties and processability is good. The intrinsic viscosity [η] of the ethylene/α-olefin/non-conjugated polyene copolymer can be measured by a method described in Examples.

In addition, the ethylene/α-olefin/non-conjugated polyene copolymer preferably satisfies the following requirement (IV).

[Requirement (IV)]

Requirement (IV) specifies that a B value represented by the following expression (i) of the ethylene/α-olefin/non-conjugated polyene copolymer is 1.20 or more.

```
B value = ([EX] + 2[Y])/[2 × [E] × ([X] + [Y])] ·· (i)
```

Wherein [E], [X], and [Y] represent mole fractions of ethylene, the α-olefin, and the non-conjugated polyene, respectively, and [EX] represents an ethylene-α-olefin diad chain fraction.

The above-described B value is more preferably 1.20 to 1.40 and especially preferably 1.20 to 1.25.

The B value falling within the above range is preferable because a compression set of the ethylene/α-olefin/non-conjugated polyene copolymer at a low temperature becomes small and balance between rubber elasticity at a low temperature and tensile strength at ordinary temperature is excellent.

When the B value of the ethylene/α-olefin/non-conjugated polyene copolymer is 1.20 or more and the non-conjugated polyene is VNB, the laminate of the present invention particularly tends to have excellent fatigue resistance, which is preferable.

The B value is an index indicating randomness in a copolymerized monomer chain distribution in a copolymer, and [E], [X], [Y], and [EX] in the above expression (i) can be obtained by measuring a $^{13}$C-NMR spectrum based on the reports by J. C. Randall [Macromolecules, 15, 353 (1982)], J. Ray [Macromolecules, 10, 773 (1977)], et al.

An amount of the α-olefin (content of the structural unit derived from the α-olefin) and an amount of the non-conjugated polyene (content of the structural unit derived from the non-conjugated polyene) in the ethylene/α-olefin/non-conjugated polyene copolymer can be obtained by $^{13}$C-NMR.

While the ethylene/α-olefin/non-conjugated polyene copolymer according to the present invention has the structural units derived from ethylene, the α-olefin, and the non-conjugated polyene as described above, the ethylene/α-olefin/non-conjugated polyene copolymer according to the present invention may have a structural unit derived from an additional monomer (a monomer other than ethylene, the α-olefin, or the non-conjugated polyene) within a range not impairing the effect of the present invention. The structural unit derived from the additional monomer accounts for preferably 30% by mass or less, more preferably 25% by mass or less, and especially preferably 20% by mass or less in 100% by mass of the ethylene/α-olefin/non-conjugated polyene copolymer. Examples of the additional monomer include styrene and vinyl acetate.

In addition, a weight average molecular weight (Mw) of the ethylene/α-olefin/non-conjugated polyene copolymer according to the present invention is preferably 10,000 to 600,000, more preferably 30,000 to 500,000, and still more preferably 50,000 to 400,000.

A molecular weight distribution (Mw/Mn) of the ethylene/α-olefin/non-conjugated polyene copolymer according to the present invention is preferably 1.8 to 30, more preferably 1.8 to 25.0, and still more preferably 2.0 to 20.0. Mw and Mw/Mn can be obtained as numerical values measured by gel permeation chromatography (GPC) in terms of polystyrene.

For example, when a laminate having the layer (A) or the layer (1) of the present invention is used for a heat resistant hose such as a turbocharger hose for an automobile, an ethylene/α-olefin/non-conjugated polyene copolymer having a relatively high molecular weight can be suitably used. Specifically, an ethylene/α-olefin/non-conjugated polyene copolymer having a weight average molecular weight (Mw) of 100,000 to 600,000 can be preferably used.

<<Production method of ethylene/α-olefin/non-conjugated polyene copolymer>>

The ethylene/α-olefin/non-conjugated polyene copolymer according to the present invention is a copolymer obtained by copolymerizing monomers including ethylene, an α-olefin, and a non-conjugated polyene.

While the ethylene/α-olefin/non-conjugated polyene copolymer according to the present invention may be prepared by any production method, the ethylene/α-olefin/non-conjugated polyene copolymer according to the present invention is preferably obtained by copolymerizing monomers in the presence of a metallocene compound and is more preferably obtained by copolymerizing monomers in the presence of a catalyst system including a metallocene compound.

A preferable production method of the ethylene/α-olefin/non-conjugated polyene copolymer according to the present invention is specifically described in International Publication No. WO 2017/150612.

<<Halogen-containing polymer>>

A halogen-containing polymer forming the layer (B) and the layer (4) of the laminate of the present invention is a halogen-containing polymer having the following characteristics.

The halogen-containing polymer according to the present invention is a polymer including a halogen atom in its molecule and is preferably a polymer having a structural unit derived from a halogen-containing monomer.

The halogen-containing polymer is a polymer including a fluorine atom, that is, a fluorine atom-containing polymer.

The fluorine atom-containing polymer is preferably a rubber of the fluorine atom-containing polymer **(i.e., a fluorine-based rubber)**.

<Fluorine-based rubber>

Examples of the fluorine-based rubber according to the present invention include vinylidene fluoride (VdF)/perhalo-olefin-based elastomers such as a VdF/hexafluoropropylene (HFP) copolymer, a VdF/tetrafluoroethylene (TFE)/HFP copolymer, a VdF/TFE/perfluoro(alkylvinyl ether) (PAVE) copolymer, and a VdF/chlorotrifluoroethylene (CTFE) copolymer; VdF/non-perhalo-olefin-based elastomers such as a TFE/propylene/VdF copolymer and an HFP/ethylene/VdF copolymer; perfluoro elastomers such as a TFE/PAVE copolymer; non-perfluoro elastomers such as a TFE/propylene copolymer and an HFP/ethylene copolymer; and fluorosilicone rubbers.

The fluoro(alkylvinyl ether) may include a plurality of ether bonds. Further, it is preferable that the molecular weight of the fluorine-based rubber is 20,000 to 300,000 and preferably 50,000 to 200,000 in terms of the number average molecular weight.

Among them, in terms of thermal resistance, oil resistance and chemical resistance, elastomers of a VdF/HFP copolymer, a VdF/TFE/HFP copolymer, a VdF/TFE/PAVE copolymer, a TFE/propylene/VdF copolymer, an HFP/ethylene/VdF copolymer, a TFE/propylene copolymer, and an HFP/ethylene copolymer are preferable, and elastomers of a VdF/HFP copolymer and a VdF/TFE/HFP copolymer are especially preferable.

A polyfunctional monomer having a plurality of vinyl groups or allyl groups or an iodine- or bromine-containing monomer may be copolymerized in the fluorine-based rubber as a unit containing a crosslinkable group. In addition, double bonds, which serve as crosslinkable sites, may be caused to be generated in the molecule by performing heat treatment or the like to promote dehydrofluorination. A fluorine-based rubber which is obtained by using an olefin iodide or an olefin bromide and which has a structural unit derived from the olefin iodide or a structural unit derived from the olefin bromide as a crosslinkable unit is especially preferable.

In addition, a content of crosslinkable sites (for example, a content of a structural unit derived from an olefin bromide when an olefin bromide is used as a crosslinkable unit) in the fluorine-based rubber is preferably 0.05 to 5 mol%, still more preferably 0.15 to 3 mol%, and especially preferably 0.25 to 2 mol%. When the content of the crosslinkable sites is less than the above range, sealing performance or adhesive strength becomes insufficient, and when the content of the crosslinkable sites exceeds the above range, rubber elasticity is lost because of reduction in elongation or flexibility, for example.

<<Layer (1)>>

The layer (A) and the layer (1) of the laminate of the present invention is a layer including a copolymer composition mainly containing the ethylene/$\alpha$-olefin/non-conjugated polyene copolymer.

The copolymer composition according to the present invention is a composition containing the ethylene/$\alpha$-olefin/non-conjugated polyene copolymer and an inorganic compound that is calcium hydroxide, magnesium hydroxide, or aluminum hydroxide (hereinafter sometimes abbreviated as "inorganic compound") within a range of 0.1 to 30 parts by mass, preferably 0.5 to 25 parts by mass per 100 parts by mass of the ethylene/$\alpha$-olefin/non-conjugated polyene copolymer.

When the copolymer composition layer according to the present invention includes the inorganic compound in the amount described above, a laminate having good adhesive strength between the layer (1) and the layer (4) of the following layer (B) can be obtained.

<Inorganic compound>

The inorganic compound according to the present invention is calcium hydroxide, magnesium hydroxide, and aluminum hydroxide.

<Other additives>

An organic peroxide, carbon black, an antiaging agent, a softening agent, a metal oxide, a crosslinking aid, an onium salt, and (I) an inorganic compound containing at least one element selected from Group 2 elements and Group 13 elements and an oxygen atom may be added to (compounded in) the copolymer composition layer according to the present invention in addition to the above-described inorganic compound, for example.

[Organic peroxide]

Any organic peroxide capable of acting as a crosslinking agent for the ethylene/α-olefin/non-conjugated polyene copolymer can be suitably used as the organic peroxide.

Specific examples of the organic peroxide include dicumyl peroxide, di-tert-butyl peroxide, 2,5-di-(tert-butylperoxy) hexane, 2,5-dimethyl-2,5-di-(tert-butylperoxy) hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy) valerate, benzoyl peroxide, p-chlorobenzoyl peroxide, 2,4-dichlorobenzoyl peroxide, tert-butylperoxybenzoate, tert-butylperoxyisopropylcarbonate, diacetyl peroxide, lauroyl peroxide, and tert-butylcumyl peroxide.

The organic peroxide may be used singly or in combinations of two or more.

When the copolymer composition layer according to the present invention includes the organic peroxide, the organic peroxide is desirably used within a range of 0.1 to 5 parts by mass, preferably 0.5 to 5 parts by mass, and still more preferably 0.5 to 4 parts by mass per 100 parts by mass of the ethylene/α-olefin/non-conjugated polyene copolymer. The amount of the organic peroxide compounded falling within the above range is preferable because a surface of a crosslinked molded body has less bloom, and the layer (1) exhibits excellent crosslinking characteristics.

[Carbon black]

Examples of carbon black include various types of carbon black such as SRF, GPF, FEF, MAF, HAF, ISAF, SAF, FT, and MT; and surface-treated carbon black obtained by surface-treating these types of carbon black with a silane coupling agent, etc.

When the copolymer composition layer according to the present invention includes the carbon black, an amount of the carbon black compounded can be 10 to 300 parts by mass, preferably 10 to 200 parts by mass, more preferably about 10 to 100 parts by mass per 100 parts by mass of the ethylene/α-olefin/non-conjugated polyene copolymer.

The layer (1) according to the present invention preferably contains the carbon black within the above range, because a laminate in which mechanical properties such as tensile strength and abrasion resistance are improved can be obtained, and hardness of the laminate can be enhanced without impairing other physical properties of the laminate.

[Antiaging agent]

When the layer (1) according to the present invention contains an antiaging agent, a product lifetime of the resulting laminate can be prolonged. As the antiaging agent, conventionally known antiaging agents, for example, an amine-based antiaging agent, a phenol-based antiaging agent, and a sulfur-based antiaging agent can be used.

Specific examples of the antiaging agent include aromatic-secondary-amine-based antiaging agents such as phenylbutylamine, N,N-di-2-naphthyl-p-phenylenediamine and 4,4'-bis (α,α-dimethylbenzyl)diphenylamine (also known as 4,4'-dicumyl-diphenylamine); amine-based antiaging agents such as 2,2,4-trimethyl-1,2-dihydroquinoline polymer; phenol-based antiaging agents such as dibutylhydroxytoluene and tetrakis[methylene(3,5-di-t-butyl-4-hydroxy)hydrocinnamate]methane; thioether-based antiaging agents such as bis[2-methyl-4-(3-n-alkylthiopropionyloxy)-5-t-butylphenyl]sulfide; dithiocarbamate-based antiaging agents such as nickel dibutyldithiocarbamate; zinc salts of 2-mercaptobenzoylimidazole and 2-mercaptobenzoimidazole; and sulfur-based antiaging agents such as dilaurylthiodipropionate and distearylthiodipropionate.

The antiaging agent can be used singly or in combinations of two or more.

When the layer (1) according to the present invention contains the antiaging agent, an amount thereof compounded is 0.5 to 5.0 parts by mass, preferably 0.5 to 4.5 parts by mass, and more preferably 0.5 to 4.0 parts by mass per 100 parts by mass of the ethylene/α-olefin/non-conjugated polyene copolymer. The amount compounded falling within the above range is preferable because the resulting laminate is excellent in heat aging resistance.

[Softening agent]

As the softening agent, components known as softening agents, processing aids, and the like conventionally compounded in rubbers can be widely used.

Specific examples thereof include petroleum-based softening agents such as paraffin-based processed oils, naphthene-based processed oils, and aromatic processed oils; softening agents based on synthesized oils; co-oligomer of ethylene and an α-olefin; paraffin wax; liquid paraffin; white oil; petrolatum; softening agents based on coal tar such as coal tar and coal tar pitch; softening agents based on vegetable oils, such as castor oil, cotton oil, linseed oil, canola oil, coconut oil, palm oil, soya oil, groundnut oil, Japan wax, rosin, pine oil, dipentene, pine tar, and tall oil; substitutes (factices) such as black substitute, white substitute, and candy substitute; waxes such as beeswax, carnauba wax, and lanolin; fatty acids, fatty acid salts, and esters, such as ricinoleic acid, palmitic acid, stearic acid, linoleic acid, lauric acid, myristic acid, barium stearate, calcium stearate, magnesium stearate, zinc stearate, and zinc laurate; ester-based plasticizers such as dioctyl phthalate, dioctyl adipate, and dioctyl sebacate; coumarone-indene resin; phenol-formaldehyde resin; terpene-phenol resin; polyterpene resin; and petroleum-based hydrocarbon resins such as synthesized polyterpene resins, aromatic hydrocarbon resins, aliphatic hydrocarbon resins, aliphatic cyclic hydrocarbon resins, aliphatic/alicyclic petroleum resins, aliphatic/aromatic petroleum resins, hydrogenated modified alicyclic hydrocarbon resins, hydrogenated hydrocarbon resins, liquid polybutene, liquid polybutadiene, and atactic polypropylene.

Among these softening agents, fatty acids, petroleum-based softening agents, phenol-formaldehyde resin, and petroleum-based hydrocarbon resins are preferable; fatty acids, petroleum-based softening agents, and petroleum-based hydrocarbon resins are more preferable; and fatty acids and petroleum-based softening agents are especially preferable.

Among the petroleum-based softening agents, petroleum-based processed oils are preferable, paraffin-based processed oils, naphthene-based processed oils, aromatic processed oils, and the like are more preferable, and paraffin-based processed oils are especially preferable among them. Among the petroleum-based hydrocarbon resins, aliphatic cyclic hydrocarbon resins are preferable. Among these softening agents, paraffin-based processed oils are especially preferable.

These softening agents can be used singly or in combinations of two or more.

When the layer (1) according to the present invention includes the softening agent, an amount thereof compounded is usually less than 200 parts by mass, preferably 0 to 100 parts by mass, more preferably 0 to 80 parts by mass, still more preferably 0 to 70 parts by mass, and especially preferably 0 to 60 parts by mass per 100 parts by mass of the ethylene/α-olefin/non-conjugated polyene copolymer.

[Metal oxide]

The metal oxide can be appropriately selected according to applications of the laminate, and can be used singly or in combinations of two or more. Specific examples of the metal oxide include zinc flower (for example, META-Z102) (trade name: zinc oxide manufactured by Inoue Calcium Corporation or the like) and magnesium oxide.

When the layer (1) according to the present invention includes the metal oxide, an amount thereof compounded is usually 0.5 to 20 parts by mass, preferably 0.5 to 15 parts by mass, more preferably 0.5 to 10 parts by mass, and still more preferably 0.5 to 5 parts by mass per 100 parts by mass of the ethylene/α-olefin/non-conjugated polyene copolymer.

[Crosslinking aid]

Examples of the crosslinking aid include sulfur; quinonedioxime compounds such as p-quinonedioxime; polyfunctional monomers such as (meth)acrylate compounds, such as trimethylolpropane triacrylate, and polyethylene glycol dimethacrylate; allyl compounds such as diallylphthalate and triallyl cyanurate; maleimide compounds such as m-phenylene bismaleimide; and divinylbenzene. The crosslinking aid may be used singly or in combinations of two or more.

When the layer (1) according to the present invention includes the crosslinking aid, an amount thereof compounded is usually 0 to 4.0 parts by mass, preferably 0 to 3.5 parts by mass, more preferably 0 to 3.0 parts by mass, and still more preferably 0.1 to 3.0 parts by mass per 100 parts by mass of the ethylene/α-olefin/non-conjugated polyene copolymer.

In addition, it is also desirable that the amount of the crosslinking aid compounded is preferably 0.5 to 2 moles and more preferably an amount approximately equimolar per mole of the organic peroxide.

[Onium salt]

Examples of the onium salt include quaternary ammonium salts, quaternary phosphonium salts, oxonium salts, sulfonium salts, cyclic amines, and monofunctional amine compounds. Among them, quaternary ammonium salts and quaternary phosphonium salts are preferable.

The onium salt may be used singly or in combinations of two or more.

Examples of the quaternary ammonium salts are not particularly limited and include dialkyl(C14-18) dimethylammonium chloride, 1,8-diazabicyclo[5,4,0]-7-undecenium salts, 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0]-7-undecenium hydroxide, 8-methyl-1,8-diazabicyclo[5,4,0]-7-undecenium methyl sulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter referred to as "DBU-B"), 8-benzyl-1,8-diazabicyclo[5,4,0]-7-undecenium hydroxide, 8-phenethyl-1,8-diazabicyclo[5,4,0]-7-undecenium chloride, and 8-(3-phenylpropyl)-1,8-diazabicyclo[5,4,0]-7-undecenium chloride. Among them, dialkyl(C14-18) dimethylammonium chloride is preferable.

In addition, examples of the quaternary phosphonium salts are not particularly limited and can include tetrabutyl phosphonium chloride, benzyltriphenylphosphonium chloride (hereinafter referred to as "BTPPC"), benzyltrimethylphosphonium chloride, benzyltributylphosphonium chloride, tributylallyl phosphonium chloride, tributyl-2-methoxypropylphosphonium chloride, and benzylphenyl(dimethylamino)phosphonium chloride. Among them, in terms of vulcanization performance and physical properties of vulcanized products, benzyltriphenylphosphonium chloride (BTPPC) is preferable.

In addition, a solid solution of a quaternary ammonium salt, a quaternary phosphonium salt, and bisphenol AF and a compound disclosed in JP H11-147891 A can also be used.

In addition, examples of the amine compound include hexamethylenediamine carbamate, N,N'-dicinnamylidene-1,6-hexamethylenediamine, and 4,4'-bis(aminocyclohexyl)methanecarbamate. Among them, N,N'-dicinnamylidene-1,6-hexamethylenediamine is preferable.

As the onium salt, a commercially available product may be used, and "LIPOQUAD 2HT FLAKE" (manufactured by Lion Specialty Chemicals Co., Ltd., dialkyl(C14-18) dimethylammonium chloride, which is also referred to as "LIPOQUAD 2HTF" in the present invention) can be used, for example.

When the layer (1) according to the present invention includes the onium salt, an amount thereof compounded is preferably 0.2 parts by mass or more, more preferably 0.2 parts by mass or more and 10 parts by mass or less, and still more preferably 0.5 parts by mass or more and 8 parts by mass or less per 100 parts by mass of the ethylene/$\alpha$-olefin/non-conjugated polyene copolymer.

[Inorganic compound containing at least one element selected from Group 2 elements and Group 13 elements and oxygen atom]

The inorganic compound containing at least one element selected from Group 2 elements and Group 13 elements and an oxygen atom is not particularly limited, and examples thereof include an oxide, a carbonate, and a hydrotalcite compound containing at least one element selected from Group 2 elements and Group 13 elements.

The at least one element selected from Group 2 elements and Group 13 elements is at least one element selected from Mg, Ca, Ba and Al, for example.

Commercially available products may be used as the inorganic compound containing at least one element selected from Group 2 elements and Group 13 elements and an oxygen atom, and "DHT-4A" (manufactured by Kyowa Chemical Industry Co., Ltd., a hydrotalcite compound: $Mg_{4.3}Al_2(OH)_{12.6}CO_3 \cdot mH_2O$) can be used, for example.

When the layer (1) according to the present invention includes the inorganic compound containing at least one element selected from Group 2 elements and Group 13 elements and an oxygen atom, an amount thereof compounded is preferably 7 parts by mass or more and more preferably 7 parts by mass or more and 100 parts by mass or less per 100 parts by mass of the ethylene/$\alpha$-olefin/non-conjugated polyene copolymer.

A lower limit of the inorganic compound containing at least one element selected from Group 2 elements and Group 13 elements and an oxygen atom is especially preferably 10 parts by mass or more. An upper limit thereof is still more preferably 80 parts by mass or less, further preferably 50 parts by mass or less, especially preferably 40 parts by mass or less, and most preferably 35 parts by mass.

The layer (1) according to the present invention may include various additive components conventionally added to rubber compositions such as a filler, a foaming agent, an antioxidant, a processing aid, a surfactant, and a weathering agent in addition to the above-described additives and the like. Furthermore, a resin component other than the ethylene/$\alpha$-olefin/non-conjugated polyene copolymer may be contained as necessary.

[Filler]

Examples of the filler include inorganic fillers such as silica, activated calcium carbonate, light calcium carbonate, heavy calcium carbonate, fine powder talc, talc, fine powder silicic acid and clay. An amount of these fillers can be 0 to 300 parts by mass and preferably about 0 to 200 parts by mass per 100 parts by mass of the ethylene/$\alpha$-olefin/non-conjugated polyene copolymer. By using a filler, a laminate having improved mechanical properties such as tensile strength, tear strength, and abrasion resistance can be obtained, and hardness of the resulting laminate can be enhanced without impairing other physical properties of the laminate.

[Antioxidant]

It is also preferable that the layer (1) according to the present invention contains an antioxidant in terms of prolonging a material lifetime thereof.

Examples of the antioxidant include aromatic secondary amine-based stabilizing agents such as phenylnaphthylamine, 4,4'-($\alpha$,$\alpha$-dimethylbenzyl)diphenylamine, and N,N'-di-2-naphthyl-p-phenylenediamine; phenol-based stabilizing agents such as 2,6-di-t-butyl-4-methylphenol and tetrakis-[methylene-3-(3',5'-di-t-butyl-4'-hydroxyphenyl)propionate] methane; thioether-based stabilizing agents such as bis[2-methyl-4-(3-n-alkylthiopropionyloxy)-5-t-butylphenyl]sulfide; benzimidazole-based stabilizing agents such as 2-mercaptobenzimidazole; dithiocarbamate-based stabilizing agents such as nickel dibutyldithiocarbamate; and quinoline-based stabilizing agents such as a polymerized product of 2,2,4-trimethyl-1,2-dihydroquinoline. They may be used singly or in combinations of two or more.

When the layer (1) according to the present invention includes the antioxidant, the antioxidant can be used in an amount compounded of, for example, 5 parts by mass or less and preferably 3 parts by mass or less per 100 parts by mass of the ethylene/$\alpha$-olefin/non-conjugated polyene copolymer.

In addition, the layer (1) according to the present invention can appropriately contain various additives which can be compounded in known rubber compositions in addition to the ethylene/$\alpha$-olefin/non-conjugated polyene copolymer as necessary.

A surfactant may be compounded in the layer (1) according to the present invention. Examples of the surfactant include amines such as di-n-butylamine, dicyclohexylamine, monoethanolamine, triethanolamine, "ACTING B (manufactured by YOSHITOMI PHARMACEUTICAL INDUSTRIES, LTD.) and "ACTING SL (manufactured by YOSHITOMI PHARMACEUTICAL INDUSTRIES, LTD.), polyethylene glycol, diethylene glycol, lecithin, triallyl trimellitate, zinc compounds of aliphatic and aromatic carboxylic acids (examples: "Struktol activator 73," "Struktol IB531," and "Struktol FA541" manufactured by Schill&Seilacher GmbH), "ZEONET ZP" (manufactured by Zeon Corporation), octadecyltrimethylammonium bromide, synthesized hydrotalcite, and special quaternary ammonium compounds (examples: "LIPOQUAD 2HTF"(manufactured by Lion Specialty Chemicals Co., Ltd., dialkyl(C14-18) dimethylammonium chloride). LIPOQUAD 2HTF is most preferable as the surfactant.

When the layer (1) according to the present invention includes the surfactant, an amount thereof compounded is, for example, 0.2 to 10 parts by mass, preferably 0.3 to 8 parts by mass, still more preferably 0.3 to 7 parts by mass, especially preferably 0.5 to 7 parts by mass, and most preferably 1 to 6 parts by mass per 100 parts by mass of the ethylene/$\alpha$-olefin/non-conjugated polyene copolymer. The surfactant can be appropriately selected according to applications thereof and can be used singly or in combinations of two or more.

In addition, a pseudo-gel inhibitor may be compounded in the layer (1) according to the present invention. An example of the pseudo-gel inhibitor is "NHM-007" (manufactured by Mitsui Chemicals, Inc.).

When the layer (1) according to the present invention includes the pseudo-gel inhibitor, an amount thereof compounded is usually 0.1 to 15 parts by mass, preferably 0.5 to 12 parts by mass, and still more preferably 1.0 to 10 parts by mass per 100 parts by mass of the ethylene/$\alpha$-olefin/non-conjugated polyene copolymer.

Other additives may be further compounded in the layer (1) according to the present invention as necessary. Examples of the other additives include heat stabilizers, weathering stabilizers, antistatic agents, colorants, lubricants, and thickeners.

Additional resin components other than the ethylene/$\alpha$-olefin/non-conjugated polyene copolymer may be compounded in the layer (1) according to the present invention as necessary. The additional resin components are not particularly limited, and examples thereof include polyolefin resins.

When a polyolefin resin is compounded in the ethylene/$\alpha$-olefin/non-conjugated polyene copolymer, product hardness can be adjusted, and compound viscosity can be decreased at a processing temperature at the same time. Therefore, processability can be further enhanced. In addition, compounding with a polyolefin resin is preferable because polyolefin resins can be handled as thermoplastic elastomers and handling performance and a range of kneading technique are widened.

Usually, a polyolefin resin whose number average molecular weight measured by GPC is 10,000 or more in terms of standard polystyrene is suitably used as the polyolefin resin.

Examples of the polyolefin resin include an $\alpha$-olefin homopolymer and an $\alpha$-olefin copolymer. Examples of the $\alpha$-olefin homopolymer include polyethylene and polypropylene, and examples of the $\alpha$-olefin copolymer include a copolymer of ethylene and an $\alpha$-olefin having 3 to 20 carbon atoms. Examples of the copolymer of ethylene and an $\alpha$-olefin having 3 to 20 carbon atoms include ethylene/propylene rubber (EPR), propylene/ethylene rubber (PER), ethylene/butene rubber (EBR), and ethylene/octene rubber (EOR).

Among them, polyethylene, an ethylene/$\alpha$-olefin copolymer, and polypropylene are preferable as the polyolefin resin.

The polyolefin resin may be used singly or in combinations of two or more.

When the layer (1) according to the present invention includes the polyolefin resin, an amount thereof compounded is, for example, 1 to 100 parts by mass, preferably 5 to 80 parts by mass, and more preferably about 10 to 50 parts by mass per 100 parts by mass of the ethylene/$\alpha$-olefin/non-conjugated polyene copolymer.

Within the above range, hardness of the resulting laminate can be adjusted, and compound viscosity can be decreased at a processing temperature at the same time. Therefore, processability can be further enhanced. In addition, the above range is preferable because polyolefin resins can be handled as thermoplastic elastomers and handling performance and a range of kneading technique are widened.

<<Layer (4)>>

The layer (B) and the layer (4) of the laminate of the present invention are layers prepared using the fluorine-based polymer described above.

The layer (4) according to the present invention may be prepared using at least the fluorine-based polymer and is usually a layer prepared using not only the fluorine-based polymer but also a component other than the fluorine-based polymer as a raw material.

The layer (4) of the laminate of the present invention is a fluorine-based polymer.

The layer (4) according to the present invention is usually a layer prepared through crosslinking using the fluorine-based polymer. Examples of the component other than the fluorine-based polymer include the inorganic compound containing at least one element selected from Group 2 elements and Group 13 elements and a hydroxy group, the organic peroxide, the carbon black, the antiaging agent, the softening agent, the metal oxide, the crosslinking aid, the onium salt, and other components described with respect to the layer (1).

The above-described additives are used in the layer (4) in amounts compounded similarly to those in the layer (1), with the ethylene/$\alpha$-olefin/non-conjugated polyene copolymer replaced with the fluorine-based polymer.

Polyol-crosslinking, peroxide-crosslinking, and amine-crosslinking are generally known as crosslinking methods of the fluorine-based polymer. Among them, amine-crosslinking is used less often recently, because materials for amine-crosslinking are difficult to store or other reason.

When the fluorine polymer is crosslinked with a peroxide, the above-described organic peroxide can be used.

When the fluorine-based polymer is crosslinked with a polyol, a polyol-based crosslinking agent can be used.

Bisphenols are preferable as the polyol-based crosslinking agent. Specific examples thereof include polyhydroxyaromatic compounds such as 2,2'-bis(4-hydroxyphenyl)propane [bisphenol A], 2,2-bis(4-hydroxyphenyl)hexafluoropropane [bisphenol AF], bis(4-hydroxyphenyl)sulfone [bisphenol S], bisphenol A bis(diphenyl phosphate), 4,4'-dihydroxydiphenyl, 4,4'-dihydroxydiphenyl methane, and 2,2-bis(4-hydroxyphenyl)butane [bisphenol B].

Bisphenol A and bisphenol AF are preferably used as the polyol-based crosslinking agent. In addition, an alkali metal salt or an alkaline-earth metal salt of the above-described polyhydroxyaromatic compounds may also be used as the polyol-based crosslinking agent.

In addition, a commercially available master batch including a fluorine-based polymer and a polyol-based crosslinking agent may also be used as the polyol-based crosslinking agent. Examples of the commercially available master batch include Curative VC#30 (manufactured by DuPont Dow Elastomers L.L.C.: containing 50 wt% of a crosslinking agent [bisphenol AF]).

The crosslinking agent may be used singly or in combinations of two or more.

The layer (4) according to the present invention may contain an organic stiffener, an organic filler, or the like in addition to an inorganic filler including metallic hydroxides such as magnesium hydroxide, aluminum hydroxide, and calcium hydroxide; carbonates such as magnesium carbonate, aluminum carbonate, calcium carbonate, and barium carbonate; silicates such as magnesium silicate, calcium silicate, sodium silicate, and aluminum silicate; sulfates such as aluminum sulfate, calcium sulfate, and barium sulfate; synthetic hydrotalcite; metallic sulfides such as molybdenum disulfide, iron sulfide, and copper sulfide; silicon oxides such as wet silica, dry silica, fine quartz powder, and glass fibers; diatomaceous earth; asbestos; lithopone (zinc sulfide/barium sulfide); graphite; carbon black; carbon fluoride; calcium fluoride; coke; talc; mica powder; wollastonite; carbon fibers; and various whiskers as a filler.

In addition, an acid acceptor, an ultraviolet absorber, a flame retardant, an oil resistance improver, an antiscorching agent, a tackifier, and the like can be optionally compounded in the fluorine-based polymer.

The layer (4) according to the present invention may be formed using a commercially available composition including a fluorine-based polymer, which is a halogen-containing polymer, and a crosslinking agent.

Examples of the commercially available composition including a fluorine-based polymer and a crosslinking agent include DAI-EL DC-2270F and DAI-EL DC-4070 (both are manufactured by Daikin Industries, Ltd.). DAI-EL DC-2270F is a composition including a polyol-based crosslinking agent, a filler, and an acid acceptor in addition to a fluorine-based polymer, and DAI-EL DC-4070 is a composition including an organic peroxide and a filler in addition to a fluorine-based polymer.

<Laminate>

The laminate of the present invention is a laminate including the following layer (A) and the following layer (B).

Layer (A): a layer including an ethylene/α-olefin/non-conjugated polyene copolymer

Layer (B): a layer including a fluorine-based polymer

In addition, the laminate of the present invention is a laminate including the layer (1) and further including the layer (4) and is a laminate in which at least one layer of the layer (1) and at least one layer of the layer (4) are in direct contact with each other or in contact with each other with an adhesive layer interposed therebetween.

More specifically, the laminate of the present invention is a laminate including the layer (1) and the layer (4).

Examples of the laminate including the layer (1) and the layer (4) include a laminate of layer (1)/layer (4), a laminate of layer (1)/layer (4)/layer (1), a laminate of layer (4)/layer (1)/layer (4), and a laminate of layer (1)/layer (4)/layer (1)/layer (4).

A thickness of each layer constituting the laminate of the present invention is not particularly limited, and a thickness of the layer (1) is usually 0.1 to 30 mm and preferably 1 to 10 mm, and a thickness of the layer (4) is usually 0.1 to 30 mm and preferably 1 to 5 mm. In addition, a total thickness of the laminate is not particularly limited, and is usually 5 to 31 mm and preferably 5 to 20 mm. In addition, when the laminate has the adhesive layer, a thickness of the adhesive layer is not particularly limited, and is usually 0.05 to 5 mm and preferably 0.1 to 5 mm.

<Production method of laminate>

A production method of the laminate of the present invention is not particularly limited, and examples thereof include the following methods (a) to (e) for obtaining a laminate. A crosslinking step may be performed after a laminate has been obtained by any of the methods (a) to (e). Alternatively, a secondary vulcanization step may be performed in an oven or the like after primary vulcanization, to give a laminate having a layer including a crosslinked polymer or a rubber. At least one layer selected from the layer (1) are also represented by "layer (A)," and at least one layer selected from the layer (4) are also represented by "layer (B)."

(a) A method for obtaining a laminate in which the layer (A) and the layer (B) are in direct contact with each other, the method including: separately kneading materials constituting the layer (A) and materials constituting the layer (B) by a mixer such as a kneader, a roll, a Banbury mixer, or an internal mixer; and simultaneously extruding the respective kneaded materials by an extruder.

(b) A method for obtaining a laminate in which the layer (A) and the layer (B) are in direct contact with each other, the method including: kneading materials constituting the layer (A) by a mixer such as a kneader, a roll, a Banbury mixer, or an internal mixer; extruding the kneaded materials by an extruder to form the layer (A); kneading materials constituting the layer (B) by a mixer such as a kneader, a roll, a Banbury mixer, or an internal mixer; and extruding the kneaded materials above the layer (A) by an extruder.

(c) A method for obtaining a laminate in which the layer (A) and the layer (B) are in direct contact with each other, the method including: kneading materials constituting the layer (B) by a mixer such as a kneader, a roll, a Banbury mixer, or an internal mixer; extruding the kneaded materials by an extruder to form the layer (B); kneading materials constituting the layer (A) by a mixer such as a kneader, a roll, a Banbury mixer, or an internal mixer; and extruding the kneaded materials above the layer (B) by an extruder.

(d) A method for obtaining a laminate in which the layer (A) and the layer (B) are in direct contact with each other, the method including: kneading materials constituting the layer (A) by a mixer such as a kneader, a roll, a Banbury mixer, or an internal mixer; extruding the kneaded materials by an extruder to form the layer (A); kneading materials constituting the layer (B) by a mixer such as a kneader, a roll, a Banbury mixer, or an internal mixer; extruding the kneaded materials by an extruder to form the layer (B); and allowing the layer (A) and the layer (B) to directly adhere to each other.

(e) A method for obtaining a laminate in which the layer (A) and the layer (B) contact with each other with an adhesive layer interposed therebetween, the method including: kneading materials constituting the layer (A) by a mixer such as a kneader, a roll, a Banbury mixer, or an internal mixer; extruding the kneaded materials by an extruder to form the layer (A); kneading materials constituting the layer (B) by a mixer such as a kneader, a roll, a Banbury mixer, or an internal mixer; extruding the kneaded materials by an extruder to form the layer (B); and allowing the layer (A) and the layer (B) to adhere to each other using an adhesive.

In producing a laminate, it is preferable to press-shape a laminate, in which the layer (A) and the layer (B) are in direct contact with each other or in contact with each other with an adhesive layer interposed therebetween, from a viewpoint of improving peel strength between the layer (A) and the layer (B).

[Crosslinking step, primary vulcanization]

Examples of the crosslinking step or primary vulcanization include a step of preliminarily compounding components necessary for crosslinking such as a crosslinking agent in materials constituting the layer (A) or the layer (B) and causing crosslinking by heating (for example, 150 to 240°C), and a step of irradiating a laminate with an electron beam (for example, an electron beam having an energy of 0.1 to 10 MeV) to cause crosslinking. Irradiation with the electron beam is carried out so that the dose absorbed by the laminate becomes usually 0.5 to 36 Mrads, preferably 0.5 to 20 Mrads, and more preferably 1 to 10 Mrads.

When crosslinking is caused by heating during the crosslinking step or primary vulcanization, it is preferable to carry out heating while performing press-shaping from a viewpoint of improving peel strength between the layer (A) and the layer (B).

[Secondary vulcanization]

Secondary vulcanization is a step carried out after the primary vulcanization and is a step for sufficiently promoting vulcanization (crosslinking) by heating (for example, 150 to 200°C).

<Application>

Since the laminate of the present invention can satisfy various required characteristics by its layer constitution, the laminate of the present invention can be used for various applications.

The laminate of the present invention can be used for various applications. The laminate of the present invention can be used as members for automobiles, motorbikes, industrial machinery, construction machinery, or agricultural machinery, for example. Specific examples of the members include rolls for industrial use, packings (for example, capacitor packings), gaskets, belts (for example, heat-insulating belts, belts for copying machines, and conveyance belts), hoses such as hoses for automobiles (for examples, turbocharger hoses, water hoses, brake reservoir hoses, radiator hoses and air hoses), anti-vibration rubbers, anti-vibration materials or vibration-controlling materials (for example, engine mount and motor mount), muffler hangers, cables (ignition cables, cabtire cables, and high tension cables), wire covering materials (high voltage wire covering materials, low voltage wire covering materials, and wire covering materials for vessels), glass run channels, colored skin materials, paper-feeding rolls, and roofing sheets.

In addition, the ethylene/$\alpha$-olefin/non-conjugated polyene copolymer is excellent in moldability and crosslinking characteristics and can provide a crosslinked body excellent in thermal stability. Therefore, a laminate having the layer (1) can be also suitably used for applications in which the laminate is expected to be used for a long period of time at a high temperature. An ethylene/$\alpha$-olefin/VNB copolymer is preferable as the ethylene/$\alpha$-olefin/non-conjugated polyene copolymer, because excellent fatigue resistance is especially obtained, and the resulting laminate may withstand usage under severe conditions for a long time.

Among them, the laminate of the present invention is suitably used for automotive interior and exterior parts and for applications requiring heat resistance. An application example of the laminate is a hose having the laminate of the present invention as at least a part thereof. Applications of the hose are not particularly limited, and the hose is preferably used in any of applications for an automobile, a motorbike, industrial machinery, construction machinery, and agricultural machinery. More specifically, examples of the hose include a turbocharger hose, a brake reservoir hose, and a radiator hose, and the hose is especially preferably used for a turbocharger hose for an automobile.

The hose of the present invention may have the laminate of the present invention as at least a part thereof, and it may be a hose formed only of the laminate of the present invention.

The turbocharger hose of the present invention preferably has a multilayer structure which has a layer formed from a crosslinked body of a composition including the ethylene/$\alpha$-olefin/non-conjugated polyene copolymer, together with a layer of another material so as to withstand severe use conditions of a high temperature and a high pressure.

In the hose of the present invention, only one layer may be a crosslinked body, or two or more layers may each be formed from a crosslinked body.

A production method of the turbocharger hose of the present invention is not particularly limited, and examples thereof include a method of shaping an uncured turbocharger hose (laminate) having a layered structure by extrusion molding, coextrusion molding, winding of a sheet material, or a combination thereof followed by heating using a steam or the like, to give a turbocharger hose (laminate). The uncured turbocharger hose preferably has high capability of retaining its shape without shrinking or deformation.

EXAMPLES

Hereinafter, the present invention will be described in more detail by giving examples. However, the present invention is not limited to these examples.

In addition, physical properties of the copolymers, copolymer compositions, halogen-containing copolymers, and the like used in Examples 1 to 20 and Comparative Example 1 were measured by the following methods.

(Measurement and evaluation methods)

(Composition and B value of ethylene/$\alpha$-olefin/non-conjugated polyene copolymer)

The mass fraction (mass%) of each structural unit and the B value of the ethylene/$\alpha$-olefin/non-conjugated polyene copolymer were obtained from a measurement value determined by $^{13}$C-NMR. The measurement value was obtained by measuring a $^{13}$C-NMR spectrum of the copolymer by using a nuclear magnetic resonance spectrometer, Model ECX400P(manufactured by JEOL Ltd.) at a measurement temperature of 120°C, in a measuring solvent (orthodichlorobenzene/deuterated benzene = 4/ 1), with number of scans of 8,000.

(Intrinsic viscosity [$\eta$])

The intrinsic viscosity [$\eta$] (dl/g) of the ethylene/$\alpha$-olefin/non-conjugated polyene copolymer was measured at a temperature of 135°C in a measuring solvent (decalin) using a full automatic intrinsic viscometer manufactured by Rigo Co., Ltd.

(Weight average molecular weight (Mw), number average molecular weight (Mn), and molecular weight distribution (Mw/Mn))

The weight average molecular weight (Mw), the number average molecular weight (Mn), and the molecular weight distribution (Mw/Mn) of the ethylene/$\alpha$-olefin/non-conjugated polyene copolymer were numerical values in terms of polystyrene measured by gel permeation chromatography (GPC). The measurement device and conditions are as follows. In addition, molecular weights were calculated by preparing a calibration curve using commercially available monodisperse polystyrene based on conversion method.

Device: gel permeation chromatograph, Alliance, Model GP 2000 (manufactured by Waters Corporation),
analysis device: Empower 2 (manufactured by Waters Corporation),
column: TSKgel GMH6-HT $\times$ 2 + TSKgel GMH6-HTL $\times$ 2 (7.5 mm I.D. $\times$ 30 cm, manufactured by Tosoh Corporation),
column temperature: 140°C,
mobile phase: o-dichlorobenzene (containing 0.025% BHT)
detector: refractive index detector (RI), flow rate: 1.0 mL/min,
injection volume: 400 $\mu$L,
sampling time interval: 1 s
column calibration: monodisperse polystyrene (manufactured by Tosoh Corporation), and
molecular weight conversion: former EPR conversion method/calibration method taking viscosity into consideration.

(Adhesive strength)

The adhesive strength (peel strength) of laminates was measured according to the following method.

T-peel test was conducted on laminates obtained in Examples and Comparative Example with a measurement temperature: 23.0°C, test speed: 200.0 mm/min, and test piece width: 25.0 mm to measure peel strength (N/cm).

[Production of ethylene/$\alpha$-olefin/non-conjugated polyene copolymer]

[Production Example 1]

Polymerization reaction of ethylene, propylene, and 5-vinyl-2-norbornene (VNB) was continuously conducted at 87°C using a polymerization vessel having a volume of 300 L and equipped with a stirring blade.

The polymerization vessel was continuously supplied with ethylene, propylene, and VNB using hexane (amount fed: 32.6 L/h) as a polymerization solvent so that the amount of ethylene fed became 3.6 kg/h, the amount of propylene became 6.1 kg/h, the amount of VNB fed became 290 g/h, and the amount of hydrogen fed became 6.3 NL/h.

Di (p-tolyl)methylene(cyclopentadienyl) (octamethyloctahydrodibenzof luorenyl)zirconium dichloride was used as a main catalyst and continuously fed to the polymerization vessel while keeping polymerization pressure at 1.6 MPaG and polymerization temperature at 87°C so that the amount thereof fed became 0.0015 mmol/h. In addition,

$(C_6H_5)_3CB(C_6F_5)_4$ (CB-3) was continuously fed to the polymerization vessel as a cocatalyst so that the amount thereof fed became 0.0075 mmol/h, and triisobutylaluminum (TIBA) was continuously fed to the polymerization vessel as an organic aluminum compound so that the amount thereof fed became 20 mmol/h.

In this manner, a solution was obtained which contained 15.2% by mass of an ethylene/propylene/VNB copolymer formed from ethylene, propylene, and VNB. A small amount of methanol was added to the polymerization reaction liquid taken out from the lower part of the polymerization vessel to terminate polymerization reaction, and the ethylene/propylene/VNB copolymer was separated from the solvent by steam stripping treatment and subsequently dried under reduced pressure at 80°C for a whole day and night.

The ethylene/propylene/VNB copolymer (A-1) formed from ethylene, propylene, and VNB was obtained at a rate of 4.7 kg per hour through the above operations.

Physical properties of the obtained ethylene/propylene/VNB copolymer (A-1) were measured by the above-described methods. The results are shown in Table 1.

[Table 1]

Table 1

| Copolymer | A-1 | |
|---|---|---|
| Ethylene/propylene [mole ratio] | 68/32 | |
| VNB-IV [g/100 g] | 3.3 | |
| VNB content [weight%] | 1.6 | |
| Mw | 178000 | |
| Mw × VNB content/100/VNB molecular weight | 22.5 | 4.5 or more and 40 or less |
| [η] [dl/g] | 2.3 | |

[Example 1]

As a first stage, 100 parts by mass of the ethylene/propylene/VNB copolymer (A-1) obtained in Production Example 1 was roughly kneaded for 30 seconds by using a Banbury mixer, Model BB-2 (manufactured by KOBE STEEL, LTD.), and 1 part by mass of stearic acid, 45 parts by mass of carbon black (Asahi #60G, manufactured by Asahi Carbon Co., Ltd.), 45 parts by mass of carbon black (Asahi #50G, manufactured by Asahi Carbon Co., Ltd.), 40 parts by mass of carbon black (Asahi #15HS, manufactured by Asahi Carbon Co., Ltd.), 47 parts by mass of paraffin-based processed oil (Diana Process Oil PS-430, manufactured by Idemitsu Kosan Co., Ltd), and 4 parts by mass of an antiaging agent (NOCRAC CD manufactured by OUCHI SHINKO CHEMICAL INDUSTRIAL CO., LTD.) were subsequently added thereto, followed by kneading at 140°C for two minutes. Then, the ram of the mixer was raised to be cleaned, additional kneading was carried out for one minute, and the kneaded product was discharged at about 150°C to obtain a compound of the first stage.

Thereafter, as a second stage, the compound obtained in the first stage was wound around an 8-inch roll (manufactured by Nippon Roll MFG. Co., Ltd., with a surface temperature of a front roll being 50°C, a surface temperature of a back roll being 50°C, a rotational rate of the front roll being 16 rpm, and a rotational rate of the back roll being 18 rpm), and 1 part by mass of calcium hydroxide (NICC-5000, manufactured by Inoue Calcium Corporation), 3 parts by mass of a dialkylperoxide (PERHEXA 25B-40, manufactured by NOF CORPORATION), and 3 parts by mass of a crosslinking aid (trimethylolpropane-trimethacrylate) (Hi-Cross M, manufactured by Seiko Chemical CO., Ltd.) were added thereto, followed by kneading for ten minutes to obtain an uncrosslinked copolymer composition.

<<Preparation of fluorine-based polymer composition forming layer (4)>>

(Fluorine-based polymer composition)

DAI-EL DC-2270F (manufactured by Daikin Industries, Ltd.: polyol crosslinking-type fluorine-based rubber compound) was used as a fluorine-based polymer composition.

DAI-EL DC-2270F is a composition including a polyol-based crosslinking agent (bisphenol AF), a crosslinking enhancer (quaternary onium salt), a filler, and an acid acceptor in addition to a fluorine-based copolymer.

<<Shaping of laminate and evaluation on adhesive strength>>

(Preparation of laminate for T-peel test)

Each of the copolymer composition and the fluorine-based polymer composition described above was sheeted into a sheet-like shape. Thereafter, each of the sheeted uncrosslinked sheets (the copolymer composition and the fluorine-based polymer composition) of 50 g was separately sandwiched between two pieces of Lumirror (trade name) (stretched polyester (polyethylene terephthalate) film) from upside and downside, followed by pre-shaping at 120°C for two minutes using a 50-ton press, to give an uncrosslinked sheet of a 20 cm square with t (thickness) = 1 mm.

Thereafter, the uncrosslinked sheet [layer (1)] obtained from the copolymer composition and the uncrosslinked sheet [layer (4)] obtained from the fluorine-based polymer composition after being pressed were each cut into the main press size described below (15 cm × 15 cm × t = 1 mm). After being cut, the upper-side and lower-side Lumirror films were removed, and then the uncrosslinked sheets were superposed on each other. In superposing, the uncrosslinked sheets were superposed on each other in a state where a Lumirror film (t = 0.2 mm) was sandwiched between a part (width of 3 cm, length of 15 cm: grasping margin for peel test) of the uncrosslinked sheets.

The superposed uncrosslinked sheets with the Lumirror film sandwiched therebetween at said part were pressed (main press) at 180°C for ten minutes using a 100-ton press-shaping machine, to shape a crosslinked sheet (laminate) of 2 mm in thickness.

The Lumirror film was removed from the crosslinked sheet (laminate), and T-peel test was conducted on the crosslinked sheet (laminate) according to the above-described method to measure adhesive strength.

The result is shown in Table 2-1.

[Examples 2 to 20]

Laminates were prepared in the same manner as in Example 1 except that copolymer compositions obtained by adding respective compounding agents with the amounts compounded described in Tables 2-1 and 2-2 were used instead of the copolymer composition forming the layer (1) used in Example 1, and T-peel tests were conducted thereon according to the method described in Example 1 to measure adhesive strength.

Compounding agents newly compounded in Examples 2 to 20 are the following compounding agents.

Compounding agents are hydrotalcite (DHT-4A (registered trademark), manufactured by Kyowa Chemical Industry Co., Ltd.), magnesium hydroxide (KISUMA (registered trademark) 5B, manufactured by Kyowa Chemical Industry Co., Ltd.), aluminum hydroxide (HIGILITE (registered trademark) H-42, manufactured by Showa Denko K.K.), di hardened tallow alkyl dimethyl ammonium chloride (LIPOQUAD 2HT FLAKE (trade name), manufactured by Lion Specialty Chemicals Co., Ltd.), and magnesium oxide (Kyowamag (registered trademark) 150, manufactured by Kyowa Chemical Industry Co., Ltd.).

The results are shown in Table 2-1 and Table 2-2.

[Comparative Example 1]

A laminate was prepared in the same manner as in Example 1 except that the amounts compounded described in Table 2-2 (no inorganic compound (E) such as calcium hydroxide was compounded) were used instead of the copolymer composition forming the layer (1) used in Example 1, and T-peel test was conducted thereon according to the method described in Example 1 to measure adhesive strength.

The result is shown in Table 2-2.

[Table 2-1]

Table 2-1

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Layer (1) | | | | | | | | | | | | |
| First stage | Copolymer A-1 | pts. mass | 100 | 100 | 100 | 100 | 100 | 100 | 100 | 100 | 100 | 100 |
| | Stearic acid | pts. mass | 1 | 1 | 1 | 1 | 1 | 1 | 1 | 1 | 1 | 1 |
| | Asahi #60 | pts. mass | 30 | 30 | 30 | 30 | 30 | 30 | 30 | 30 | 30 | 30 |
| | Asahi #50 | pts. mass | 45 | 45 | 45 | 45 | 45 | 45 | 45 | 45 | 45 | 45 |
| | Asahi #15HS | pts. mass | 40 | 40 | 40 | 40 | 40 | 40 | 40 | 40 | 40 | 40 |
| | PS-430 | pts. mass | 47 | 47 | 47 | 47 | 47 | 47 | 47 | 47 | 47 | 47 |
| | NOCRAC CD | pts. mass | 4 | 4 | 4 | 4 | 4 | 4 | 4 | 4 | 4 | 4 |
| | Kyowamag 150 | pts. mass | - | - | - | - | 5 | 5 | 5 | 5 | - | - |
| Second stage | LIPOQUAD 2HT FLAKE | pts. mass | - | - | - | - | - | - | - | - | 3 | 3 |
| | DHT-4A | pts. mass | - | - | - | - | - | - | - | - | - | - |
| | NICC-5000 | pts. mass | 1 | 3 | - | - | 5 | 10 | 15 | 20 | 1 | 3 |
| | KISUMA 5B | pts. mass | - | - | 5 | - | - | - | - | - | - | - |
| | HIGILITE H-42 | pts. mass | - | - | - | 5 | - | - | - | - | - | - |
| | PERHEXA 25B-40 | pts. mass | 3 | 3 | 3 | 3 | 3 | 3 | 3 | 3 | 3 | 3 |
| | Hi-Cross M | pts. mass | 3 | 3 | 3 | 3 | 3 | 3 | 3 | 3 | 3 | 3 |
| Total amount | | pts. mass | 274 | 276 | 278 | 278 | 283 | 288 | 293 | 298 | 277 | 279 |
| Adhesive strength with layer (4) | | [N/cm] | 21.2 | 21.9 | 23.3 | 23.1 | 22.5 | 24.0 | 22.4 | 10.1 | 21.8 | 22.5 |

[Table 2-2]

Table 2-2

| | | | Example 11 | Example 12 | Example 13 | Example 14 | Example 15 | Example 16 | Example 17 | Example 18 | Example 19 | Example 20 | Comparative Example 1 |
|---|---|---|---|---|---|---|---|---|---|---|---|---|---|
| Layer (1) | | | | | | | | | | | | | |
| First stage | Copolymer A-1 | pts. mass | 100 | 100 | 100 | 100 | 100 | 100 | 100 | 100 | 100 | 100 | 100 |
| | Stearic acid | pts. mass | 1 | 1 | 1 | 1 | 1 | 1 | 1 | 1 | 1 | 1 | 1 |
| | Asahi #60 | pts. mass | 30 | 30 | 30 | 30 | 30 | 30 | 30 | 30 | 30 | 30 | 30 |
| | Asahi #50 | pts. mass | 45 | 45 | 45 | 45 | 45 | 45 | 45 | 45 | 45 | 45 | 45 |
| | Asahi #15HS | pts. mass | 40 | 40 | 40 | 40 | 40 | 40 | 40 | 40 | 40 | 40 | 40 |
| | PS-430 | pts. mass | 47 | 47 | 47 | 47 | 47 | 47 | 47 | 47 | 47 | 47 | 47 |
| | NOCRAC CD | pts. mass | 4 | 4 | 4 | 4 | 4 | 4 | 4 | 4 | 4 | 4 | 4 |
| | Kyowamag 150 | pts. mass | - | - | 5 | 5 | 5 | 5 | 5 | 5 | 5 | 10 | 5 |
| Second stage | LIPOQUAD 2HT FLAKE | pts. mass | 3 | 3 | 3 | 3 | 3 | 3 | 3 | 3 | 3 | 3 | - |
| | DHT-4A | pts. mass | - | - | - | - | - | - | - | - | 10 | - | - |
| | NICC-5000 | pts. mass | - | - | 5 | 10 | 15 | 20 | - | - | 10 | 10 | - |
| | KISUMA 5B | pts. mass | 5 | - | - | - | - | - | 20 | - | - | - | - |
| | HIGILITE H-42 | pts. mass | - | 5 | - | - | - | - | - | 20 | - | - | - |
| | PERHEXA 25B-40 | pts. mass | 3 | 3 | 3 | 3 | 3 | 3 | 3 | 3 | 3 | 3 | 3 |
| | Hi-Cross M | pts. mass | 3 | 3 | 3 | 3 | 3 | 3 | 3 | 3 | 3 | 3 | 3 |
| Total amount | | pts. mass | 281 | 281 | 286 | 291 | 296 | 301 | 301 | 301 | 301 | 296 | 278 |
| Adhesive strength with layer (4) | | [N/cm] | 21.3 | 22.0 | 21.4 | 20.6 | 19.7 | 25.7 | 22.9 | 17.3 | 18.3 | 21.9 | Did not adhere |

## Claims

1. A laminate comprising a layer (A) and a layer (B), wherein the layer (A) is the following layer (1), and the layer (B) is the following layer (4), and
   wherein at least one layer (A) of the layer (1) and at least one layer (B) of the layer (4) are in direct contact with each other or in contact with each other with an adhesive layer interposed therebetween:

   layer (A)
   layer (1): a layer including a copolymer composition containing an ethylene/α-olefin/non-conjugated polyene copolymer and 0.1 to 30 parts by mass of an inorganic compound (E) that is calcium hydroxide, magnesium hydroxide, or aluminum hydroxide per 100 parts by mass of the ethylene/α-olefin/non-conjugated polyene copolymer,
   layer (B)
   layer (4): a layer including a halogen-containing polymer that is a fluorine-based polymer.

2. The laminate according to claim 1, wherein the layer (1) further contains 0.2 parts by mass or more and 10 parts or less of an onium salt per 100 parts by mass of the ethylene/$\alpha$-olefin/non-conjugated polyene copolymer.

3. The laminate according to claim 1 or 2, wherein the layer (1) and the layer (4) directly adhere to each other.

4. The laminate according to any one of claims 1 to 3, wherein the ethylene/$\alpha$-olefin/non-conjugated polyene copolymer satisfies the following requirements (I) to (III):

requirement (I): having a mole ratio (ethylene/$\alpha$-olefin) between a structural unit derived from ethylene and a structural unit derived from an $\alpha$-olefin of 40/60 to 99.9/0.1,
requirement (II): having a structural unit derived from a non-conjugated polyene in an amount of 0.07 to 10% by mass in 100% by mass of the ethylene/$\alpha$-olefin/non-conjugated polyene copolymer, and
requirement (III): having an intrinsic viscosity [$\eta$] measured in decalin at 135°C of 1.0 to 4.0 dl/g.

5. The laminate according to any one of claims 1 to 4, wherein the ethylene/$\alpha$-olefin/non-conjugated polyene copolymer has a structural unit derived from 5-vinyl-2-norbornene (VNB).

6. The laminate according to any one of claims 1 to 5, wherein the ethylene/$\alpha$-olefin/non-conjugated polyene copolymer satisfies the following requirement (IV):

requirement (IV): having a B value represented by the following expression (i) of 1.20 or more:

$$B\ value\ =\ ([EX]\ +\ 2[Y])/[2\ \times\ [E]\ \times\ ([X]\ +\ [Y])]\ \cdot\cdot\ (i)$$

wherein [E], [X], and [Y] represent mole fractions of ethylene, the $\alpha$-olefin, and the non-conjugated polyene, respectively, and [EX] represents an ethylene-$\alpha$-olefin diad chain fraction.

7. A hose comprising the laminate according to any one of claims 1 to 6 as at least a part thereof.

8. The hose according to claim 7, which is used in any of applications for an automobile, a motorbike, industrial machinery, construction machinery, and agricultural machinery, preferably wherein the hose is used for a turbocharger hose for an automobile.

**Patentansprüche**

1. Schichtstoff, umfassend eine Schicht (A) und eine Schicht (B), wobei die Schicht (A) die nachfolgende Schicht (1) ist und die Schicht (B) die nachfolgende Schicht (4) ist, und
wobei wenigstens eine Schicht (A) der Schicht (1) und wenigstens eine Schicht (B) der Schicht (4) in direktem Kontakt miteinander oder in Kontakt miteinander mit einer dazwischen angeordneten Klebstoffschicht stehen:

Schicht (A)
Schicht (1): eine Schicht, die eine Copolymer-Zusammensetzung beinhaltet, die ein Ethylen/$\alpha$-Olefin/nicht-konjugiertes Polyen-Copolymer und 0,1 bis 30 Masseteile einer anorganischen Verbindung (E), die Calciumhydroxid, Magnesiumhydroxid oder Aluminiumhydroxid enthält, pro 100 Masseteile des Ethylen/$\alpha$-Olefin/nicht-konjugierten Polyen-Copolymers ist,
Schicht (B)
Schicht (4): eine Schicht, die ein halogenhaltiges Polymer beinhaltet, das ein Polymer auf Fluorbasis ist.

2. Schichtstoff nach Anspruch 1, wobei die Schicht (1) ferner 0,2 Masseteile oder mehr und 10 Teile oder weniger eines Oniumsalzes pro 100 Masseteile des Ethylen/$\alpha$-Olefin/nicht-konjugierten Polyen-Copolymers enthält.

3. Schichtstoff nach Anspruch 1 oder 2, wobei die Schicht (1) und die Schicht (4) direkt aneinander haften.

4. Schichtstoff nach einem der Ansprüche 1 bis 3, wobei das Ethylen/$\alpha$-Olefin/nichtkonjugiertes Polyen-Copolymer die folgenden Anforderungen (I) bis (III) erfüllt:

Anforderung (I): mit einem Molverhältnis (Ethylen/$\alpha$-Olefin) zwischen einer Struktureinheit, die von Ethylen abgeleitet ist, und einer Struktureinheit, die von einem $\alpha$-Olefin abgeleitet ist, von 40/60 bis 99,9/0,1, Anforderung (II): mit einer Struktureinheit, die von einem nicht-konjugierten Polyen abgeleitet ist, in einer Menge von 0,07 bis 10 Masse-% in 100 Masse-% des Ethylen/$\alpha$-Olefin/nicht-konjugiertes Polyen-Copolymers, und Anforderung (III): mit einer intrinsischen Viskosität [$\eta$], gemessen in Decalin bei 135 °C, von 1,0 bis 4,0 dl/g.

5.  Schichtstoff nach einem der Ansprüche 1 bis 4, wobei das Ethylen/$\alpha$-Olefin/nichtkonjugiertes Polyen-Copolymer eine Struktureinheit aufweist, die von 5-Vinyl-2-norbornen (VNB) abgeleitet ist.

6.  Schichtstoff nach einem der Ansprüche 1 bis 5, wobei das Ethylen/$\alpha$-Olefin/nichtkonjugiertes Polyen-Copolymer die folgende Bedingung (IV) erfüllt:

    Anforderung (IV): mit einem B-Wert, dargestellt durch den folgenden Ausdruck (i), von 1,20 oder mehr:

    $$B\text{-Wert} = ([EX] + 2[Y]) / [2 \times [E] \times ([X] + [Y])] \qquad (i)$$

    wobei [E], [X] und [Y] die Molbrüche von Ethylen, dem $\alpha$-Olefin und dem nicht-konjugierten Polyen darstellen und [EX] eine Ethylen-$\alpha$-Olefin-Diadkettenbruch darstellt.

7.  Schlauch, umfassend den Schichtstoff nach einem der Ansprüche 1 bis 6 als wenigstens einen Teil davon.

8.  Schlauch nach Anspruch 7, der in einer der Anwendungen für ein Automobil, ein Motorrad, Industriemaschinen, Baumaschinen und Landmaschinen verwendet wird, vorzugsweise wobei der Schlauch für einen Turboladerschlauch für ein Kraftfahrzeug verwendet wird.

## Revendications

1.  Stratifié comprenant une couche (A) et une couche (B), dans lequel la couche (A) est la couche (1) suivante, et la couche (B) est la couche (4) suivante, et
    dans lequel au moins une couche (A) de la couche (1) et au moins une couche (B) de la couche (4) sont en contact direct l'une avec l'autre ou en contact l'une avec l'autre avec une couche adhésive interposée entre elles :

    couche (A)
    couche (1) : une couche incluant une composition de copolymère contenant un copolymère éthylène/$\alpha$-oléfine/polyène non conjugué et 0,1 à 30 parties en masse d'un composé inorganique (E) qui est de l'hydroxyde de calcium, de l'hydroxyde de magnésium ou de l'hydroxyde d'aluminium pour 100 parties en masse du copolymère éthylène/$\alpha$-oléfine/polyène non conjugué,
    couche (B)
    couche (4) : une couche incluant un polymère contenant un halogène qui est un polymère à base de fluor.

2.  Stratifié selon la revendication 1, dans lequel la couche (1) contient en outre au moins 0,2 partie en masse et au plus 10 parties d'un sel d'onium pour 100 parties en masse du copolymère éthylène/$\alpha$-oléfine/polyène non conjugué.

3.  Stratifié selon la revendication 1 ou 2, dans lequel la couche (1) et la couche (4) adhèrent directement l'une à l'autre.

4.  Stratifié selon l'une quelconque des revendications 1 à 3, dans lequel le copolymère éthylène/$\alpha$-oléfine/polyène non conjugué satisfait les exigences (I) à (III) suivantes :

    exigence (I) : un rapport molaire (éthylène/$\alpha$-oléfine) entre une unité structurelle dérivée à partir d'éthylène et une unité structurelle dérivée à partir d'une $\alpha$-oléfine de 40/60 à 99,9/0,1,
    exigence (II) : une unité structurelle dérivée à partir d'un polyène non conjugué dans une quantité de 0,07 à 10 % en masse dans 100 % en masse du copolymère éthylène/$\alpha$-oléfine/polyène non conjugué, et
    exigence (III) : une viscosité intrinsèque [$\eta$] mesurée dans la décaline à 135 °C de 1,0 à 4,0 dl/g.

5.  Stratifié selon l'une quelconque des revendications 1 à 4, dans lequel le copolymère éthylène/$\alpha$-oléfine/polyène non conjugué présente une unité structurelle dérivée du 5-vinyl-2-norbornène (VNB).

**6.** Stratifié selon l'une quelconque des revendications 1 à 5, dans lequel le copolymère éthylène/$\alpha$-oléfine/polyène non conjugué satisfait l'exigence (IV) suivante :

exigence (IV) : une valeur B représentée par l'expression (i) suivante égale ou supérieure à 1,20 :

$$\text{Valeur B} = ([EX] + 2[Y]) / [2 \text{ x } [E] \text{ x } ([X] + [Y])] \qquad (i)$$

où [E], [X] et [Y] représentent des fractions molaires d'éthylène, de l'$\alpha$-oléfine et du polyène non conjugué, respectivement, et [EX] représente une fraction de chaîne diadique d'éthylène-$\alpha$-oléfine.

**7.** Tuyau comprenant le stratifié selon l'une quelconque des revendications 1 à 6 en tant qu'au moins une partie de celui-ci.

**8.** Tuyau selon la revendication 7, qui est utilisé dans l'une quelconque d'applications pour une automobile, une motocyclette, des machines industrielles, des machines de construction, et des machines agricoles, préférablement dans lequel le tuyau est utilisé pour un tuyau de turbocompresseur pour une automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005523181 A
- JP 61189934 A
- JP H01152060 A
- WO 2003039858 A
- JP 2009500473 A
- JP 2013221580 A
- JP 2014162823 A
- WO 2017150612 A
- JP H11147891 A

**Non-patent literature cited in the description**

- **J. C. RANDALL**. *Macromolecules*, 1982, vol. 15, 353
- **J. RAY**. *Macromolecules*, 1977, vol. 10, 773